# EUROPEAN PATENT APPLICATION

(11) **EP 3 439 351 A1**
(43) Date of publication of application: **06.02.2019**
(21) Application number: 17773831.7
(22) Date of filing: 20.02.2017
(51) Int. Cl.: H04W 24/02, H04L 12/70, H04M 3/00, H04W 16/10, H04W 88/18

(54) **SLICE INFORMATION CHANGING METHOD, AND COMMUNICATION SYSTEM**

(30) Priority: 29.03.2016 JP 2016065816
(71) Applicant: NTT DOCOMO, INC., Chiyoda-ku Tokyo 100-6150 (JP)
(72) Inventor: SHIMIZU, Masayoshi, Tokyo 100-6150 (JP); IWASHINA, Shigeru, Tokyo 100-6150 (JP); SHIMOJOU, Takuya, Tokyo 100-6150 (JP)
(74) Representative: Viering, Jentschura & Partner mbB Patent- und Rechtsanwälte
(86) International application number: PCT/JP2017/006176
(87) International publication number: WO 2017/169283

(57) **Abstract**

A slice information changing method for changing slice information in a system in which a terminal holds a slice type as the slice information related to a slice that is a virtual network logically generated on a network infrastructure includes: a step of transmitting a slice type change request to a service management unit that manages a service processed using a network resource, by a slice management unit that manages the slice in the system (S1); a step of transmitting the slice type change request to a process server that performs a process related to the terminal, by the service management unit (S2A and S2C); and a step of controlling the terminal to change the slice type as the slice information held by the terminal on the basis of the slice type change request, by the process server (S2B and S2D).

## Description

### Technical Field

The present invention relates to a slice information changing method and a communication system for changing slice information, and more particularly to a slice information changing method and a communication system in a network constructed based on a virtualization technology.

In addition, in the present specification, a "service" is referred to as a service processed using a network resource such as a communication service (dedicated line service or the like) and an application service (video delivery, and a service using a sensor device such as an embedded device). A "slice" is a virtual network that is logically generated on a network infrastructure, and the service is allocated to the slice and is processed using the network resource of the allocated slice.

### Background Art

A network system using a conventional virtualization technology generates a slice that is a virtual network which is logically generated on a network infrastructure, by virtually separating a hardware resource using a virtualization technology disclosed in Non-Patent Literature 1. Accordingly, it is possible to provide a service using a network of each of independent slices, by allocating the service to the slice. Therefore, in a case where a slice is allocated to each of services having various requirements, it is possible to easily satisfy the requirements of each service and to reduce signaling processes and the like.

In addition, configuring the above-described slice by a dedicated core network has been examined. At that time, a form in which a UE holds a slice type and an eNB holds a slice node list is examined (refer to Non Patent Literature 2).

### Citation List

### Non Patent Literature

[Non Patent Literature 1] Akihiro Nakao, "Virtualization-node project: Virtualization technology for new generation network", [online], June 2010, National Institute of Information and Communications Technology, [Searched on March 16, 2015], <http://www.nict.go.jp/publication/NICT-News/1006/01.html>
[Non Patent Literature 2] 3GPP TR 23.711 V0.3.0 (2016-01)

### Summary of Invention

### Technical Problem

At the time when service requirement conditions change according to a change of a terminal state, at the time when a system state changes due to an increase or decrease of a system load and a maintenance of a system element, and the like, it is necessary to change a current slice to a new slice suitable for the slice requirement conditions after the change and the system state after the change.

However, in the form in which the UE holds the slice type and the eNB holds the slice node list (that is, the form in which the UE and the eNB hold slice information (slice type and slice node list)), means for changing the slice information held by the UE and the eNB have not yet been sufficiently examined. In addition, in a case where the existing method of changing a slice is applied, there is a problem that the changed slice information that is changed by the UE and the eNB is not able to be applied to a slice change process.

The present invention has been made to solve the above-described problem, and an object of the present invention is to suitably execute a process related to a change of slice information.

### Solution to Problem

A slice information changing method according to an aspect of the present invention is a slice information changing method for changing slice information in a system in which a terminal holds a slice type indicating a type of slice as the slice information related to a slice that is a virtual network logically generated on a network infrastructure. The slice information changing method includes: a step of transmitting a slice type change request to a service management unit that manages a service processed using a network resource of the system, by a slice management unit that manages the slice in the system; a step of transmitting the slice type change request to a process server that performs a process related to the terminal, by the service management unit that received the slice type change request; and a step of controlling the terminal to change the slice type as the slice information held by the terminal on the basis of the slice type change request, by the process server that received the slice type change request.

In the slice information changing method described above, the slice management unit transmits the slice type change request to the service management unit, the service management unit transmits the slice type change request to the process server, and the process server controls the terminal such that the terminal changes the slice type as the slice information held by the terminal on the basis of the slice type change request. With such a procedure, it is possible to suitably execute the process related to the change of the slice information (slice type) held by the terminal.

The invention related to the slice information changing method described above may also be regarded as an invention related to a communication system, and may be described as follows. A communication system according to an aspect of the present invention is a communication system configured to include a terminal that holds a slice type indicating a type of a slice as slice information related to the slice that is a virtual network logically generated on a network infrastructure, a slice management unit that manages the slice, a service management unit that manages a service processed using a network resource, and a process server that performs a process related to the terminal. The slice management unit is configured to transmit a slice type change request to the service management unit, the service management unit is configured to transmit the slice type change request to a process server in a case where the service management unit receives the slice type change request, and the process server is configured to control the terminal to change the slice type as the slice information held by the terminal on the basis of the slice type change request in a case where the process server receives the slice type change request.

A slice information changing method according to another aspect of the present invention is a slice information changing method for changing slice information in a system in which a base station holds a slice node list indicating one or more nodes related to provision of a service using a slice as slice information related to the slice that is a virtual network logically generated on a network infrastructure. The slice information changing method includes: a step of transmitting a slice node list change request to a service management unit that manages the service processed using a network resource of the system, by a slice management unit that manages the slice in the system; and a step of: transmitting the slice node list change request to a process server that performs a process related to a terminal and controlling the base station to change the slice node list as the slice information held by the base station on the basis of the slice node list change request transmitted from the process server, by the service management unit that received the slice type change request, or transmitting the slice node list change request to the base station and controlling the base station to change the slice node list as the slice information held by the base station on the basis of the slice node list change request, by the service management unit that received the slice type change request.

In the slice information changing method described above, the slice management unit transmits the slice node list change request to the service management unit; and the service management unit transmits the slice node list change request to the process server and controls the base station to change the slice node list as the slice information held by the base station on the basis of the slice node list change request transmitted from the process server, or the service management unit transmits the slice node list change request to the base station and controls the base station to change the slice node list as the slice information held by the base station on the basis of the slice node list change request. With such a procedure, it is possible to suitably execute the process related to the change of the slice information (slice node list) held by the base station.

In addition, the slice information changing method described above may further include: a step of transmitting a reroute request including a slice type to the base station, by the process server; a step of selecting, by the base station that received the reroute request, a new process server according to the slice type included in the reroute request on the basis of the slice node list held by the base station. In this case, after the base station receives the reroute request including the slice type from the process server, the base station may suitably select the new process server according to the slice type included in the reroute request on the basis of the slice node list held by the base station.

The invention related to the slice information changing method described above may also be regarded as an invention related to a communication system, and may be described as follows. A communication system according to another aspect of the present invention is a communication system configured by including a base station that holds a slice node list indicating one or more nodes related to a provision of a service using a slice as slice information related to the slice that is a virtual network logically generated on a network infrastructure, a slice management unit that manages the slice, a service management unit that manages the service processed using a network resource, and a process server that performs a process related to the terminal. The slice management unit is configured to transmit a slice node list change request to the service management unit, and the service management unit is configured to: transmit the slice node list change request to the process server and control the base station to change the slice node list as the slice information held by the base station on the basis of the slice node list change request transmitted from the process server, or transmit the slice node list change request to the base station and control the base station to change the slice node list as the slice information held by the base station on the basis of the slice node list change request, in a case where the service management unit receives the slice node list change request.

### Advantageous Effects of Invention

According to the present invention, it is possible to suitably execute the process related to the change of the slice information.

### Brief Description of Drawings

FIG. 1 is a diagram illustrating a configuration example of a system according to an embodiment of the present invention.
FIG. 2 is a diagram illustrating a hardware configuration example of each device.
FIG. 3 is a flowchart illustrating a first process example.
FIG. 4 is a flowchart illustrating a second process example.

### Description of Embodiments

Hereinafter, an embodiment of a slice allocation method according to the present invention will be described in detail with reference to the drawings. In addition, in the description of the drawings, the same reference numerals are given to the same elements and duplicated description thereof is omitted.

### [Description of system configuration example]

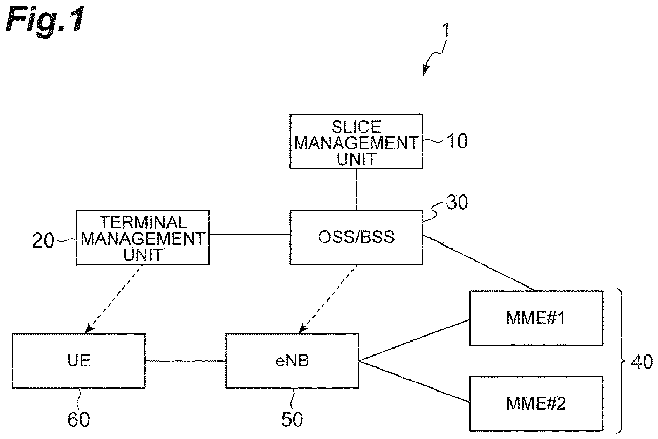

As shown in FIG. 1, a communication system 1 according to an embodiment of the present invention is configured to include: a terminal (user equipment, hereinafter referred to as "UE) 60; an eNodeB (hereinafter referred to as "eNB") 50 corresponding to a base station in a long term evolution (LTE) network; a plurality of MMEs 40 that perform a process such as a position management, authentication control and communication path setting of the UE 60 located in the LTE network; a slice management unit 10 that manages a slice that is a virtual network logically generated on a network infrastructure; a terminal management server 20 that manages a position, a state, and the like of the UE 60; and an operations support system/a business support system (OSS/BSS) 30 that receives a request from the slice management unit 10 or the UE management unit 20 and notifies the MME 40 of the request.

In addition, although not shown in the drawings because there is little relevance to the present invention, the communication system 1 is configured to further include: a home subscriber server (HSS) that manages subscriber information including contract information of a communication terminal such as the UE 60, authentication information, communication service information, terminal type information and location information in a database; and a domain name system (DNS) server that manages a correspondence relationship between a domain name or a host name and an IP address on a network.

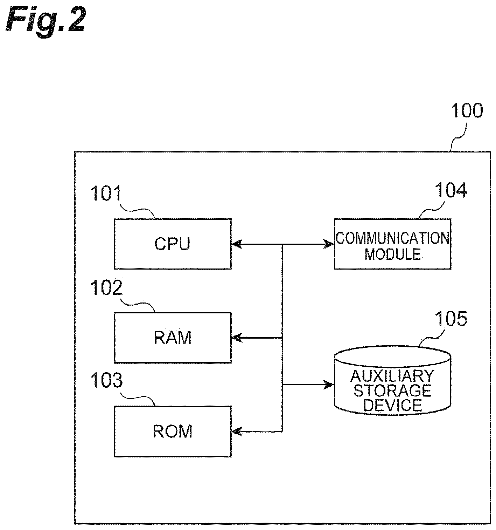

However, each of devices (collectively referred to as devices 100) in FIG 1 is configured by a general computer having a communication function. For example, as shown in FIG. 2, such devices 100 are configured by one or a plurality of computers including hardware such as one or a plurality of CPUs 101, a random access memory (RAM) 102 and a read only memory (ROM) 103 that are main storage devices, a communication module 104 (transmitter or receiver) for performing communication, and an auxiliary storage device 105 (memory) such as a hard disk. In the device 100, the communication module 104 and the like are operated under the control of the CPU 101 by reading predetermined computer software on the hardware such as the CPU 101 and the RAM 102 shown in FIG. 2, and a series of functions in each unit is realized by reading and writing data in the RAM 102 and the auxiliary storage device 105.

In addition, a processor such as the CPU 101 may be configured to execute all or a part of functions of the processor with a dedicated integrated circuit (IC). For example, the above-described functions may be executed by constructing a dedicated integrated circuit for performing an image process or communication control.

Software can be software, firmware, middleware, or microcode, and whether it is called a hardware description language, or called another name, can be widely interpreted as referring to instructions, an instructions set, code, code segments, program code, programs, subprograms, software modules, applications, software applications, software packages, routines, subroutines, objects, executable files, execution threads, procedures, functions, and the like.

In addition, the software, the instruction or the like may be transmitted and received through a transmission medium. For example, in a case where the software is transmitted from a website, a server, or other remote sources using a wired technology such as a coaxial cable, a fiber optic cable, and a twisted pair and digital subscriber line (DSL) and/or a wireless technology such as infrared light, radiowaves, and microwaves, such wired and/or wireless technologies are included in a definition of the transmission medium.

### [Description of process examples]

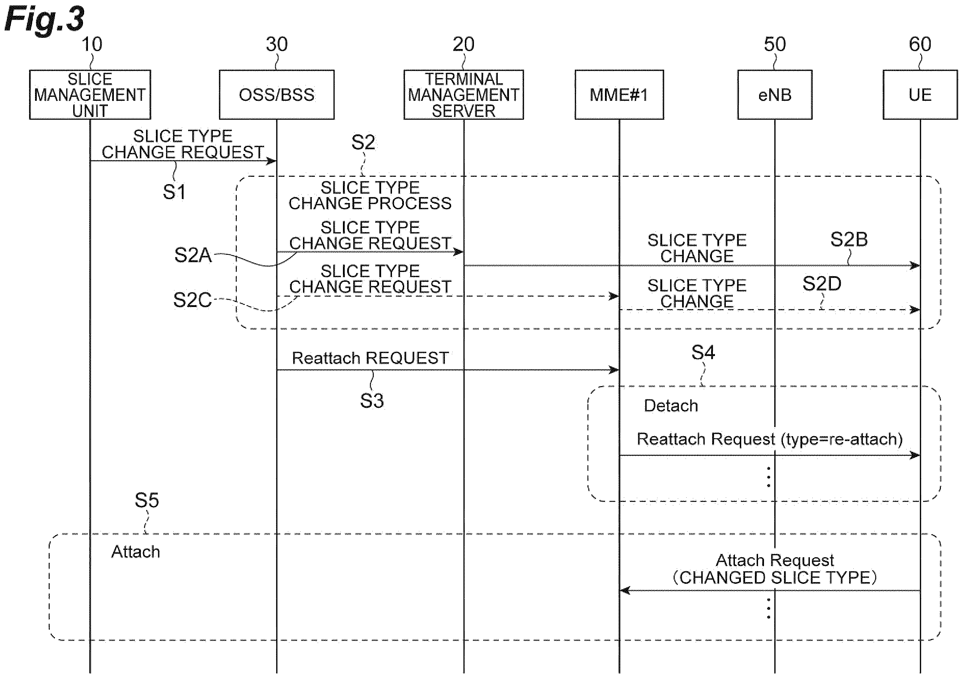

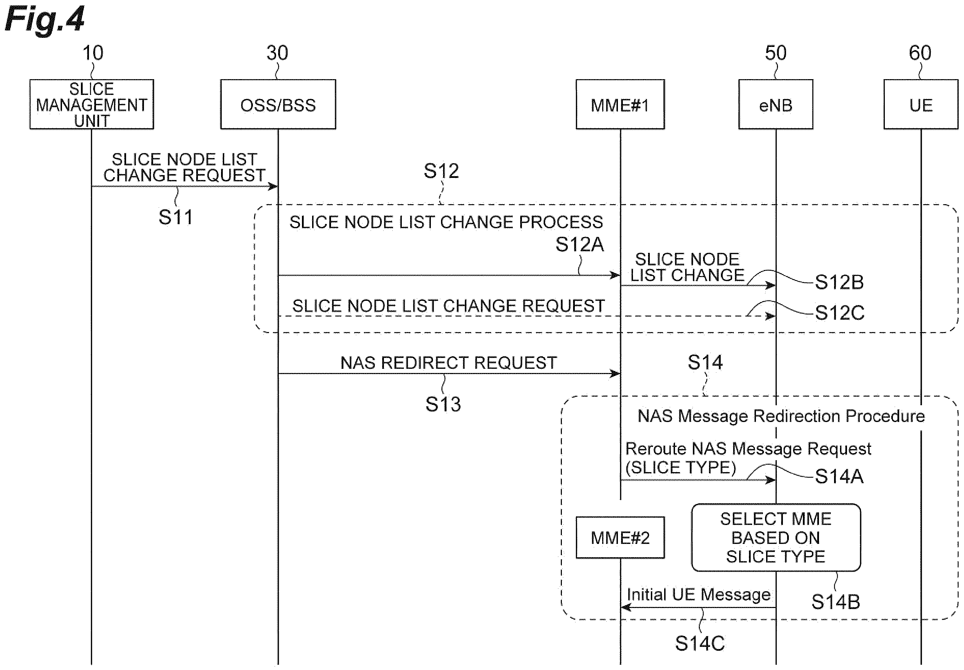

Subsequently, a first process (FIG. 3) related to a slice information changing method for changing slice information (slice type) held by the UE 60 and a second process (FIG. 4) related to a slice information changing method for changing slice information (slice node list) held by the eNB 50 will be described in order.

### (Regarding the first process)

As shown in FIG. 3, in a case where the slice management unit 10 transmits a slice type change request to the OSS/BSS 30 (step S1), the following slice type change process is executed (step S2). Here, as the slice type change process, there are two variations of a process including steps S2A and S2B shown by a solid line in FIG. 3 and a process including steps S2C and S2D shown by a broken line in FIG. 3, and one of the processes is executed.

In a case of the process including steps S2A and S2B, the OSS/BSS 30 transmits the slice type change request to the terminal management server 20 (step S2A), and the terminal management server 20 controls the UE 60 to change the slice information (slice type) held by the UE 60 on the basis of the slice type change request (step S2B).

On the other hand, in a case of the process including steps S2C and S2D, the OSS/BSS 30 transmits the slice type change request to the MME 40 (step S2C), and the MME 40 controls the UE 60 to change the slice information (slice type) held by the UE 60 on the basis of the slice type change request (step S2D).

Using the slice type change process (step S2) as described above, it is possible to suitably execute the process related to the change of the slice information (slice type) held by the UE 60.

After that, the following process is executed on the basis of the changed slice information (slice type). In a case where the OSS/BSS 30 transmits a Reattach request to the MME 40 (step S3), a detach process including the transmission of the Reattach Request from the MME 40 to the UE 60 is executed between the MME 40 and the UE 60 (step S4). In addition, an Attach Request including the changed slice information (a new slice type) is transmitted from the UE 60 to the MME 40, and an attach process is executed between the UE 60 and the slice management unit 10 (step S5).

Therefore, it is possible to suitably execute the process related to the change of the slice information (slice type) held by the UE 60.

### (Regarding the second process)

As shown in FIG. 4, in a case where the slice management unit 10 transmits a slice node list change request to the OSS/BSS 30 (step S11), the following slice node list change process is executed (step S12). Here, as the slice node list change process, there are two variations of a process including steps S12A and S12B shown by a solid line in FIG. 4 and a process including step S12C shown by a broken line in FIG. 4, and one of the processes is executed.

In a case of the process including steps S12A and S12B, the OSS/BSS 30 transmits the slice node list change request to an MME#1 that is an old MME (step S12A), and the MME#1 controls the eNB 50 to change the slice information (slice node list) held by the eNB 50 on the basis of the slice node list change request (step S12B).

On the other hand, in a case of the process including step S12C, the OSS/BSS 30 directly transmits the slice node list change request to the eNB 50 and controls the eNB 50 to change the slice information (slice node list) held by the eNB 50 on the basis of the slice node list change request (step S12C).

Using the slice node list change process (step S12) as described above, it is possible to suitably execute the process related to the change of the slice information (slice node list) held by the eNB 50.

After that, the following process is executed on the basis of the changed slice information (slice node list). In a case where the OSS/BSS 30 transmits an NAS redirect request to the MME#1 (step S13), an NAS message redirect process is executed between the MME#1 that is the old MME, the eNB 50, and an MME#2 that is a new MME (step S14). That is, in a case where the MME#1 transmits a reroute request (Reroute NAS Message Request) including the slice type to the eNB 50 (step S14A), the eNB 50 received the reroute request selects the new MME (here, the MME#2) corresponding to the slice type included in the reroute request from the changed slice node list (step S14B), and transmits an Initial UE Message to the selected MME#2, and controls a subsequent NAS message such that it is redirected to the MME#2 (step S14C).

Therefore, it is possible to suitably execute the process related to the change of the slice information (slice node list) held by the eNB 50. In addition, the eNB 50 may suitably select the new MME (MME#2) according to the slice type included in the reroute request on the basis of the slice node list held by the eNB 50 after the eNB 50 receives the reroute request including the slice type from the old MME (MME#1), and may control the subsequent NAS message to be redirect to the MME#2.

In addition, in a system environment in which the UE 60 holds the slice type as the slice information and the eNB 50 holds the slice node list as the slice information, the first and second processes described above may be simultaneously executed in parallel depending on a situation.

In addition, the "information" described in the present specification may be expressed using any of a various different technologies. For example, data, an instruction, a command, information, a signal, a bit, a symbol, a chip, and the like mentioned throughout the above description may be expressed by a voltage, a current, an electromagnetic wave, a magnetic field or a particle, an optical field or a photon, or an arbitrary combination thereof.

The description "on the basis of' used in the present specification does not mean "on the basis of only" unless explicitly stated otherwise. In other words, the description "on the basis of" means both "on the basis of only" and "on the basis of at least".

As long as there is no inconsistency, an order of process procedures, sequences, flowcharts, and the like of each aspect/embodiment described in the present specification may be changed. For example, the method described in the present specification suggests an exemplary order for the elements of the various steps but there is no limitation to the suggested specific order.

Each aspect/embodiment described in the present specification may be used singly or in combination, or may be used by being switched during execution. In addition, a notification of predetermined information (for example, a notification of "being X") is not limited to an explicit execution, and may be implicitly performed (for example, by not notifying the predetermined information).

Although the present invention has been described in detail above, it will be obvious to those skilled in the art that the present invention is not limited to the embodiment described in the present specification. The present invention can be implemented using changes and modifications without departing the spirit and scope of the present invention as defined by the scope of the claims. Therefore, the description of the present specification is for illustrative purposes and does not have a restrictive meaning with respect to the present invention.

In addition, the terms described in the present specification and/or the terms necessary for understanding of the present specification may be replaced with terms having the same or similar meanings.

The terms "system" and "network" used in the present specification are used interchangeably.

In addition, the information, the parameters, and the like described in the present specification may be expressed by an absolute value, may be expressed by a relative value with respect to a predetermined value, or may be expressed by other corresponding information. For example, a wireless resource may be indicated by an index.

When "include", "including", and variations thereof are used in the present specification or the claims, they are intended to be comprehensive in a manner similar to the term "comprise". In addition, the term "or" used in the present specification or the claims is not intended to be an exclusive or.

In addition, each aspect/embodiment described in the present specification may be applied to long term evolution (LTE), LTE-advanced (LTE-A), SUPER 3G, IMT-advanced, 4G, 5G, future radio access (FRA), W-CDMA (registered trademark), GSM (registered trademark), CDMA 2000, ultra mobile broadband (UMB), IEEE 802.11 (Wi-Fi), an IEEE 802.16 (WiMAX), IEEE 802.20, ultra-wideband (UWB), Bluetooth (registered trademark), and other systems using a suitable system and/or a next-generation systems developed on the basis of such systems.

The input and output information and the like may be stored in a specific place (for example, a memory) or managed in a management table. The input and output information and the like may be overwritten, updated, or added to. The output information and the like may be deleted. The input information and the like may be deleted. The input information and the like may be transmitted to another device.

In the whole present disclosure, a singular form includes both single and plural cases unless the singular form clearly indicates that single is single.

### Reference Signs List

1: Communication system; 10: Slice management unit; 20: Terminal management server; 30: OSS/BSS; 40: MME; 50: eNodeB; 60: UE (terminal); 100: Device; 101: CPU; 102: RAM; 103: ROM; 104: Communication module; 105: Auxiliary storage device.

## Claims

1. A slice information changing method for changing slice information in a system in which a terminal holds a slice type indicating a type of a slice as the slice information related to the slice that is a virtual network logically generated on a network infrastructure, the slice information changing method comprising:
a step of transmitting a slice type change request to a service management unit that manages a service processed using a network resource of the system, by a slice management unit that manages the slice in the system;
a step of transmitting the slice type change request to a process server that performs a process related to the terminal, by the service management unit that received the slice type change request; and
a step of controlling the terminal to change the slice type as the slice information held by the terminal on the basis of the slice type change request, by the process server that received the slice type change request.

2. A slice information changing method for changing slice information in a system in which a base station holds a slice node list indicating one or more nodes related to a provision of a service using a slice as slice information related to the slice that is a virtual network logically generated on a network infrastructure, the slice information changing method comprising:
a step of transmitting a slice node list change request to a service management unit that manages the service processed using a network resource of the system, by a slice management unit that manages the slice in the system; and
a step of:
transmitting the slice node list change request to a process server that performs a process related to a terminal and controlling the base station to change the slice node list as the slice information held by the base station on the basis of the slice node list change request transmitted from the process server, by the service management unit that received the slice type change request, or
transmitting the slice node list change request to the base station and controlling the base station to change the slice node list as the slice information held by the base station on the basis of the slice node list change request, by the service management unit that received the slice type change request.

3. The slice information changing method of claim 2, further comprising:
a step of transmitting a reroute request including a slice type to the base station, by the process server; and
a step of selecting, by the base station that received the reroute request, a new process server according to the slice type included in the reroute request on the basis of the slice node list held by the base station.

4. A communication system configured to include a terminal that holds a slice type indicating a type of a slice as slice information related to the slice that is a virtual network logically generated on a network infrastructure, a slice management unit that manages the slice, a service management unit that manages a service processed using a network resource, and a process server that performs a process related to the terminal,
wherein the slice management unit is configured to transmit a slice type change request to the service management unit,
the service management unit is configured to transmit the slice type change request to a process server in a case where the service management unit receives the slice type change request, and
the process server is configured to control the terminal to change slice type as the slice information held by the terminal on the basis of the slice type change request in a case where the process server receives the slice type change request.

5. A communication system configured by including a base station that holds a slice node list indicating one or more nodes related to a provision of a service using a slice as slice information related to the slice that is a virtual network logically generated on a network infrastructure, a slice management unit that manages the slice, a service management unit that manages the service processed using a network resource, and a process server that performs a process related to the terminal,
wherein the slice management unit is configured to transmit a slice node list change request to the service management unit, and
the service management unit is configured to:
transmit the slice node list change request to the process server and control the base station to change the slice node list as the slice information held by the base station on the basis of the slice node list change request transmitted from the process server, or
transmit the slice node list change request to the base station and control the base station to change the slice node list as the slice information held by the base station on the basis of the slice node list change request,
in a case where the service management unit receives the slice node list change request.
